# EUROPEAN PATENT SPECIFICATION

(11) **EP 1 850 045 B1**
(45) Date of publication and mention of the grant of the patent: **03.03.2010**
(21) Application number: 06380283.9
(22) Date of filing: 06.11.2006
(51) Int. Cl.: F16L 3/04, F16L 3/237, F16B 21/08

(54) **Support clip for pipes**
Halteclip für Rohre
Agrafe pour des conduites

(30) Priority: 26.04.2006 ES 200601058
(43) Date of publication of application: 31.10.2007
(73) Proprietor: Isofix, S.L., 08192 Sant Quirze Del Valles (ES)
(72) Inventor: Yanguas Llobet, David, 08192 Sant Quirze del Valles (ES)
(74) Representative: Isern-Jara, Nuria

(56) References cited:
- DE-U1- 29 513 721
- GB-A- 2 219 342
- NL-C2- 1 001 624
- US-A- 3 430 904

## Description

### Technical field of the invention

The invention relates to a support clip for pipes that is applicable in particular as a wall fixture for pipes of the type used in electrical, heating or plumbing installations, and to any type of pipe in general.

The support clip comprises a support body that may be fastened to a wall element and at least one lateral arm that partially surrounds said pipes, thus supporting them.

### Background of the invention

There is a wide variety of known embodiments of clips of the aforementioned type that functionally stand out and differ from one another in terms of the shape of the arm or arms that they comprise, which generally consist of a material with a certain degree of flexibility, making it possible to insert the body of the pipe to be supported into an inner space defined by the arm or arms, due to the elastic deformation of the material.

An example of this type of support clips is that disclosed in patent document ES 2165794. The support clip in question comprises a core and a lateral arm that, together with one side of the core, defines the space in which the pipes are housed or clipped. The core also comprises at least one orifice that passes longitudinally therethrough and that is adapted for a means of fastening the clip to the support surface, such as a flanged bolt, to totally or partially pass through.

Some of the clips that are currently on the market basically act by directly supporting and immobilising the pipes or cables on the walls that comprise the support surface, making it difficult for the installers to connect and bend the pipes.

The walls' finish generally tends to present an uneven surface that causes the pipes to be crushed and broken when the bodies of the clips are hammered to the walls and said uneven surfaces come into contact with the surface of the pipes. The problem is worse when the pipes in question have very delicate technological formats or materials or when fluids flow through them that will be spilt if they break.

For the clip to ensure that the pipes are properly gripped, it is exclusively designed for a specific diameter of pipe and it is not advisable to reuse it for other pipes, as the arms are forced when detached and will be weakened on subsequent use.

Patent document US3430904 discloses a sheet metal clip for mounting rods or tubes in parallel relation to an aperture work support with the retaining portion being capable of handling tubes or rods of different diameters, within a designed range of sizes, in semi-positive retention. The clip includes a stud element and a head element, which comprises a straight central portion and a pair of outwardly and downwardly inclined arms which extend from opposite sides of the central portion. Connected to the extremity of each of said arms there is a reversely bent portion with a bight portion forming an overall hook-like configuration. The reversely bent portion extends in overlying opposed relation to the arm and intermediate its ends is bent downwardly toward said arm and thence upwardly at its terminal end portion to form a throat through which the rod is introduced.

Struck from the confines of the reversely bent portion and extending toward bight portion and downwardly into the space between the bent portion and the arm there is a curvilinear spring arm which is concave toward the first arm and the throat. The rod is retained by the spring arm acting against its surface on one side of its center line while an abutment of a tab near the terminal end portion of the bent portion, and a protuberance struck from the material of the inclined arm act against its surface on the opposite side of its center line. When a larger rod is inserted through the throat, the reversely bent portion will be flexed at its bight and the spring arm moved upwardly into the void from which it was struck to accommodate this greater size.

One of the drawbacks associated with the existing clips is that on many occasions the lateral grip of the pipes when fixed is not ensured by the lateral arms of the clips as they do not have sufficient gripping capacity to secure the pipes. This is further accentuated after having attached or detached a pipe several times, as the grip between the arms gradually weakens.

As has been mentioned above, the clips are provided with a means of fastening, such as e.g. a flanged bolt. To fasten the clip to the wall, a hole is drilled in its surface and the flanged bolt is inserted under pressure by hammering the body of the clip. A considerable amount of force is required to insert said bolt into the hole due to the tight fit of the flanges, particularly towards the end of the operation when the resistance of the bolt is greater owing to the compressed air inside the hole.

Another difficult task is to detach the clip from the support surface when the pipes are not longer to be fixed in that position, as it is necessary to overcome the resistance of the flanged bolt once again when removing it from the orifice in which it is inserted by pulling the body of the clip, which usually causes the arms of the clip to break or the pipes to become accidentally detached.

There is therefore a clear need for a support clip for fastening and holding pipes on a support surface that provides solutions to the aforementioned problems, i.e. that makes it possible to house different diameters of pipes, that avoids the pipes being crushed and broken, and that enables the easy attachment and detachment of the clip to and from the support surface.

### Explanation of the invention

In order to provide a solution to the problems that have been posed, the invention proposes a multi-purpose support clip for pipes of the type that used to fasten and hold pipes on a support surface such as a wall.

The support clip comprises a support body and at least one first lateral curved concave arm extending therefrom that is elastically deformable and that is adapted to partially surround a pipe.

Essentially, the support clip is characterised in that it comprises at least one corresponding complementary curved concave arm between the support body and the first lateral arm, disposed opposite the lateral arm, which has a greater degree of elasticity than said lateral arm, together with which it forms a curved inner space that is adapted to tightly receive the pipe, defining the respective ends of said arms an aperture of a smaller width than the nominal diameter of the pipe to be fixed gripping it beyond its center so that, if necessary, the separation between the free ends of the two arms is variable in order to ensure a suitable fit of different diameters of pipe within a tolerance margin, the deformation of the complementary arm being limited by the support body in the direction in which the clip opens, ending the first lateral arm and its complementary arm in respective outwardly projecting lips from the curved inner space to facilitate the insertion of the pipe and prevent contact between said pipe and the support surface.

According to another characteristic of the invention, the lateral arm of the clip is provided with a central reinforcement rib that extends along its curved outer edge and whose end is joined to its respective lip.

According to another characteristic of the invention, the central reinforcement rib on the lateral arm has a constant cross-section along its entire length.

According to another characteristic of the invention, the complementary lateral arm of the first lateral arm of the clip is provided with a central reinforcement rib that extends along its entire curved outer edge and whose end is joined to its respective lip.

According to another characteristic of the invention, the rib of the inner arm of the clip is provided with a notch approximately halfway along its length in order to facilitate its adaptation to different diameters of pipe.

According to another characteristic of the invention, the support body comprises a means of fastening that will be embedded inside a hole drilled in the support surface to fasten the clip.

According to another characteristic of the invention, the means of fastening comprises a bolt with a shank that is provided with a plurality of discoid flanges distributed along its length and an essentially cylindrical connecting portion that does not have flanges, by means of which the bolt is joined to the support body of the clip.

According to another characteristic of the invention, the connecting portion of the fastening bolt is solid and is adapted to absorb the shear stress to be supported by the support body when the fastening bolt is duly embedded in the hole drilled in the support surface and the pipe or pipes are fixed to the clip.

According to another characteristic of the invention, the connecting portion of the fastening bolt is provided with a longitudinal groove.

According to another characteristic of the invention, the discoid flanges of the shank of the fastening bolt have at least one respective radial notch that is aligned with that of the other flanges, thus defining a longitudinal groove that is aligned with the longitudinal groove of the connecting portion of the fastening bolt as an outlet for the compressed air inside the hole drilled in the support surface as the fastening bolt is inserted into said orifice.

According to another characteristic of the invention, the means of fastening is removably attached to the support body.

According to another characteristic of the invention, the means of fastening is solidly joined to the support body.

According to another characteristic of the invention, the support body comprises a window-like orifice to facilitate the removal of the means of fastening from inside the hole drilled in the support surface as a tool such as a screwdriver or a cord is inserted into said orifice and tensile force is applied in the direction in which it is to be removed.

### Brief description of the drawings

In the attached drawings a preferred embodiment of the support clip that is the object of the invention is illustrated by means of a non-limiting example. In said drawings:
- Fig. 1,: is a front elevation view of the support clip that is the object of the invention, according to a first embodiment;
- Fig. 2,: is a cross-section taken across A-A of Fig. 1;
- Fig. 3,: is a front elevation view of the support clip according to a second embodiment;
- Fig. 4,: is a front elevation view of the support clip according to a third embodiment;
- Fig. 5,: is a front elevation view of the support clip according to a fourth embodiment;
- Fig. 6: is a perspective view of the support clip shown in Fig. 5; and
- Fig. 7,: is a perspective view of a support clip according to a fifth embodiment.

### Detailed description of the drawings

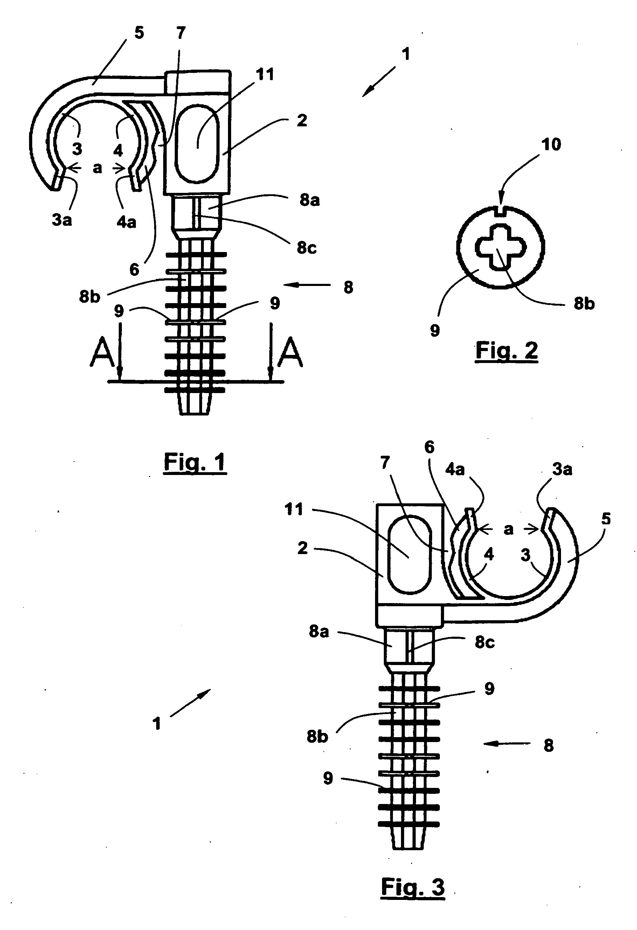

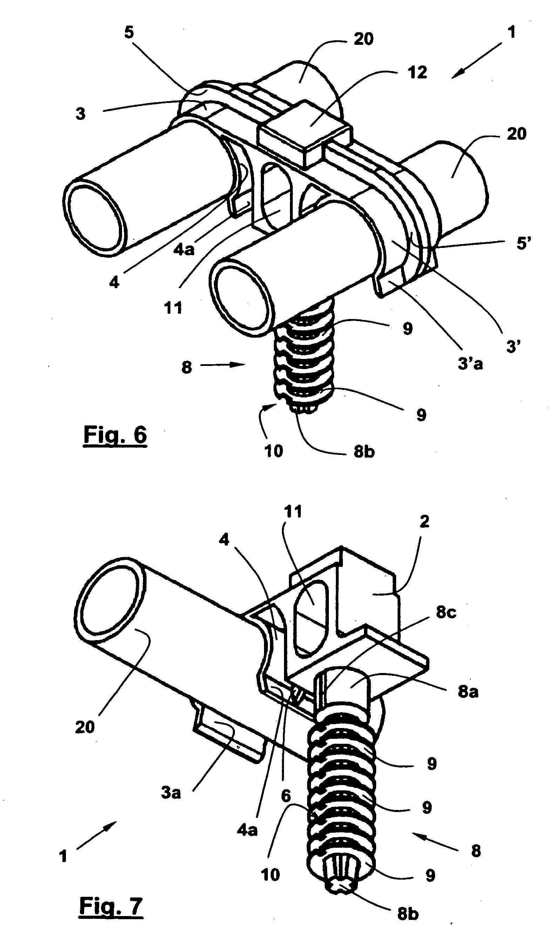

Figures 1, 3 and 7 show respective embodiments of the support clip 1 that is the object of the present invention, in particular in its variant as a simple clip for holding and fastening a pipe 20. The clip 1 comprises a support body 2, a first lateral arm 3 that is elastically deformable, its corresponding complementary arm 4 and a means of fastening 8. The clips 1 in Figs. 1 and 2 only differ in terms of the direction in which the pipe 20 enters the clip 1 in relation to the means of fastening 8; that of Fig. 7 differs in that the support body 2 has an essentially elongated lateral appendix on the opposite face to the lateral and complementary arms 3 and 4, which facilitates the contact between the base of the support body 2 and the support surface on which said clip 1 is to be mounted.

The arms 3 and 4 have a curved concave form and define an essentially circular outer profile in the form of a clip or clamp in which to house a pipe 20. The free ends of the lateral arm 3 and its corresponding complementary arm 4 end in respective outwardly projecting lips 3a and 4a. The situation of these lips 3a and 4a facilitates the insertion of the pipe 20 and prevents contact between the pipe 20 when held in its operational position by the support clip 1 as shown in Figs. 1 and 7 with the support surface on which it is fixed, therefore ensuring that said pipe 20 will not be damaged by an uneven surface of the support wall as they will not come into contact at any point.

It can also be observed that the ends of the first lateral arm 3 and the corresponding complementary arm 4, which end in the lips 3a and 4a, respectively, are reciprocally distanced to define an aperture of a smaller width than the nominal diameter of the pipe 20 to be fixed. It is thus ensured that inner arm 4 is long enough to surround the pipe 20 always gripping it above its centre, favouring the correct inward pressure of the clip 1.

The lateral arm 3 and the inner arm 4 each have a central reinforcement rib 5 and 6, respectively, which extends along its curved outer edge and whose end is joined to the corresponding lip 3a and 4a. Both the rib 5 of the lateral arm 3 and the rib 6 of the complementary arm 4 have a constant cross-section along their entire length. In particular, Fig. 6, which corresponds to a double support clip 1, shows that the cross-section of the ribs 5 and 5' of the first lateral arm 3 and the second lateral arm 3' is essentially rectangular and of a constant height. The ribs 5, 5', 6 and 6' reinforce the lateral grip of the pipes 20 increasing the tendency of the lateral arms 3, 3' and their corresponding complementary arms 4 and 4' to move towards one another.

Returning to the support clip 1 in Fig. 1, it should be mentioned that the complementary arm 4 situated between the lateral arm 3 and the support body 2, has a greater degree of elasticity than the lateral arm 3. The elasticity of said complementary arm 4 is calculated in such a way that it gives sufficiently to allow different diameters of pipe 20 to enter within a tolerance margin and it is at the same time capable of allowing said pipes to fit tightly under pressure and ensuring that they are held by the support clip 1. Therefore, as a pipe 20 is inserted between the inner space of the curved surface formed by the lateral arm 3 and its corresponding complementary arm 4, the latter will adapt to it by sufficiently varying its separation from the lateral arm 3 to ensure that the pipe 20 is reliably supported and retained. It should be mentioned that the deformation of the complementary arm 4 is limited by the support body 2 in the direction in which the clip 1 opens, thus preventing the pipe 20 from working loose or being released on this side.

As shown in Figs. 1, 3, 4 and 5, the ribs 6 and 6' of the complementary arms 4 and 4' have a narrowing section in the form of a notch 7, approximately halfway along their length, which helps pipes 20 of different diameters to adapt to the support clip 1.

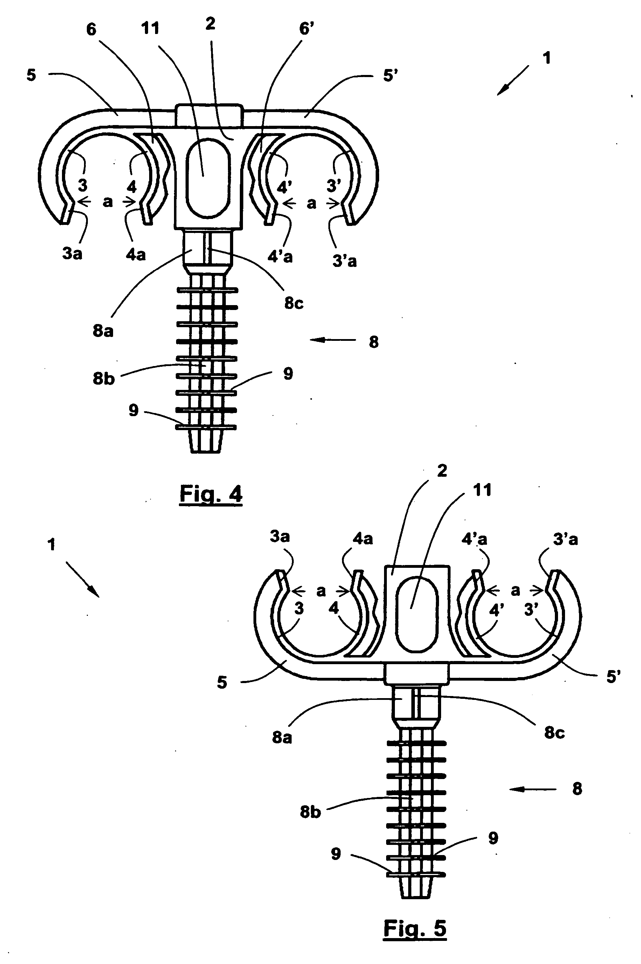

The support clip 1, whether single (Figs. 1, 3 and 7) or double (Figs. 4, 5 and 6), comprises a means of fastening 8 to fasten the clip 1 to the support surface. The means of fastening 8 comprises a flanged bolt that will be housed inside a hole drilled in the wall on which the clip is to be mounted.

The fastening bolt 8 consists of an essentially cylindrical connecting portion 8a between the fastening bolt 8 and the support body 2 and a shaft 8b with a plurality of discoid flanges 9 distributed along its length. The outer diameter of said flanges 9 is greater than the diameter of the hole drilled in the wall on which the clip is to be mounted, meaning that the fastening bolt 8 enters the orifice tightly under pressure with the aid of a hammer or similar tool by hammering the outer face of the support body 2 of the clip 1 opposite the bolt.

On conventional flanged bolts the fastening thereof to walls usually involves great efforts to achieve their complete insertion into the drilled holes due to the resistance of the flanges and to the increasing accumulation of pressurised air at the back of the orifice as the bolt is inserted. The same difficulty occurs as the bolts are removed from the orifices when conventional clips are detached from the wall.

In order to solve these problems, the discoid flanges 9 of the fastening bolt 8 are provided with at least one radial notch 10, so that when aligned they form a longitudinal groove that provides an outlet for the compressed air inside the orifice. Said radial notch 10 can be seen in detail in the cross-section in Fig. 2, which is taken along A-A of Fig. 1. The positive effects of the longitudinal groove can be noted particularly towards the end of the hammering operation, the moment of greatest pressure on the compressed air, which makes it possible to avoid damaging or breaking the pipes 20 that are being installed.

Furthermore, to facilitate the removal of the fastening bolt 8 from inside the orifice in the wall, the support body 2 comprises a window-like orifice 11 through which to insert a simple tool such as a screwdriver or a cord and thus apply tensile force in the direction in which it is to be removed without the risk of the pipes 20 becoming detached from the clip 1.

Fastening bolts in general are subjected to high shear stresses in the section where they join the grip, clamp or clip when the device in question is fastened to the surface, which is the reason why conventional fastening bolts often tend to weaken in this section, even to the point of breaking.

It should be mentioned that in order to prevent the breaking of said joining section, i.e. the cylindrical connecting portion 8a of the fastening bolt 8, it has a solid cross-section of a diameter that is essentially the same as that of the hole drilled in the wall to fasten the clip 1. Said cross-section is calculated to absorb the aforementioned shear stress. It should be mentioned that said connecting portion 8a is also provided with a longitudinal groove 8c that is aligned with the radial notches 10 on the shank 8b of the bolt so that they form an outlet channel for the compressed air inside the hole drilled in the wall.

The fastening bolt 8 can be solidly joined to one of the faces of the support body 2 or it can be removably attached thereto, so that it can be mounted on either side of the support body 2, as shown in Figs. 1 and 3 or Figs. 4 and 5, respectively.

If the means of fastening 8 is removably attached to the support body 2 of the clip 1, said support body 2 comprises at least one internally threaded blind longitudinal orifice, which is not shown in the drawings and which is adapted to receive the end of the connecting portion 8a of the fastening bolt 8, said end being threaded complementarily to that of the longitudinal orifice. Should a clip 1 be required into which it is possible to screw the fastening bolt 8 to either side of the support body 2 indistinctly, i.e. with the lateral arm 3 and complementary arm 4 facing the support surface or facing the opposite direction, the support body 2 has two blind orifices on opposite sides, of a sufficient length for the bolt to be screwed in but without it actually reaching the window-like orifice 11.

Although in Figs. 1 to 7 the means of fastening 8 has been shown by the aforementioned flanged fastening bolt 8, it should be understood that the means of fastening 8 of the support clip 1 can consist of a flat bar, an exteriorly threaded bar, a traditional screw or any other means of fastening that can be adapted to fasten the clip 1 to the support surface.

## Claims

1. Multi-purpose support clip (1) for pipes of the type used to fasten and hold pipes (20) on a support surface such as a wall, which comprises a support body (2) and at least one first lateral curved concave arm (3, 3') extending therefrom that is elastically deformable and adapted to partially surround a pipe, **characterised in that** it comprises at least one corresponding complementary curved concave arm (4, 4') between the support body and the first lateral arm, disposed opposite the lateral arm, which has a greater degree of elasticity than said lateral arm, together with which it forms a curved inner space that is adapted to tightly receive the pipe, defining the respective ends of said arms an aperture of a smaller width than the nominal diameter of the pipe to be fixed gripping it beyond its center so that, if necessary, the separation between the free ends of the two arms is variable in order to ensure a suitable fit of different diameters of pipe within a tolerance margin, the deformation of the complementary arm being limited by the support body in the direction in which the clip opens, ending the first lateral arm and its complementar arm in respective outwardly projecting lips (3a, 3a', 4a, 4a') from the curved inner space to facilitate the insertion of the pipe and prevent contact between said pipe and the support surface.

2. Support clip (1) according to claim 1, **characterised in that** the lateral arm (3, 3') of the clip is provided with a central reinforcement rib (5, 5') that extends along its curved outer edge and whose end is joined to its respective lip (3a, 3a').

3. Support clip (1) according to claim 2, **characterised in that** the central reinforcement rib (5, 5') of the lateral arm (3, 3') has a constant cross-section along its entire length.

4. Support clip (1) according to any of claims 1 to 3, **characterised in that** the complementary arm (4, 4') of the first lateral arm of the clip is provided with a central reinforcement rib (6, 6') that extends along its entire curved outer edge and whose end is joined to its respective lip (4a, 4a').

5. Support clip (1) according to claim 4, **characterised in that** the rib (6, 6') of the inner arm (4, 4') of the clip is provided with a notch (7) approximately halfway along its length to facilitate the adaptation to different diameters of pipe

6. Support clip (1) according to any of the previous claims, **characterised in that** the support body (2) comprises a means of fastening (8) that will be embedded inside a hole drilled in the support surface to fasten the clip.

7. Support clip (1) according to claim 6, **characterised in that** the means of fastening (8) comprises a bolt with a shank (8b) that is provided with a plurality of discoid flanges (9) distributed along its length and an essentially cylindrical connecting portion (8a) that does not have flanges, by means of which the bolt is joined to the support body (2) of the clip.

8. Support clip (1) according to claim 7, **characterised in that** the connecting portion (8a) of the fastening bolt (8) is solid and is adapted to absorb the shear stress to be supported by the support body (2) when the fastening bolt is duly embedded in the hole drilled in the support surface and the pipe or pipes are fastened to the clip.

9. Support clip (1) according to claim 8, **characterised in that** the connecting portion (8a) of the fastening bolt is provided with a longitudinal groove (8c).

10. Support clip (1) according to claim 9, **characterised in that** the discoid flanges (9) of the shank (8b) of the fastening bolt (8) have at least one respective radial notch (10) that is aligned with that of the other flanges, which defines a longitudinal groove that is aligned with the longitudinal groove (8c) of the connecting portion (8a) of the fastening bolt as an outlet for the compressed air inside the hole drilled in the support surface as the fastening bolt (8) is inserted into said orifice.

11. Support clip (1) according to any of claims 6 to 10, **characterised in that** the means of fastening (8) is removably attached to the support body (2).

12. Support clip (1) according to any of claims 6 to 10, **characterised in that** the means of fastening (8) is solidly joined to the support body (2).

13. Support clip (1) according to claim 11 or 12, **characterised in that** the support body (2) comprises a window-like orifice (11) to facilitate the removal of the means of fastening (8) from the hole drilled in the support surface as a tool such as a screwdriver or a cord is inserted into said orifice and tensile force is applied in the direction in which it is to be removed.

## Patentansprüche

1. Mehrzweck-Stützschelle (1) für Rohre der Art, wie sie zum Befestigen und Halten von Rohren (20) an einer Stützfläche wie einer Wand verwendet wird, welche einen Stützkörper (2) und zumindest einen ersten seitlichen, gekrümmten, konkaven Arm (3, 3') umfasst, der sich von diesem ausstreckt, der elastisch verformbar und dazu angepasst ist, ein Rohr teilweise zu umgeben, **dadurch gekennzeichnet, dass** sie zumindest einen entsprechenden komplementären gekrümmten, konkaven Arm (4, 4') zwischen dem Stützkörper und dem ersten seitlichen Arm umfasst, der gegenüber des seitlichen Arms angeordnet ist, welcher einen größeren Elastizitätsgrad hat als der genannte seitliche Arm, mit welchem er zusammen einen gekrümmten, inneren Raum bildet, der angepasst ist, das Rohr eng aufzunehmen, wobei die jeweiligen Enden der genannten Arme eine Öffnung definieren, die eine kleinere Breite hat als der Nenndurchmesser des zu fixierenden Rohrs, indem sie diese über seinen Mittelpunkt hinaus greifen, so dass, falls nötig, der Abstand zwischen den freien Enden der beiden Arme variabel ist, um eine geeignete Passung von verschiedenen Durchmessern des Rohrs innerhalb eines Toleranzbereichs zu gewährleisten, wobei die Verformung des komplementären Arms durch den Stützkörper in der Richtung begrenzt ist, in welcher sich die Schelle öffnet, wobei der erste seitliche Arm und sein komplementärer Arm in jeweiligen nach außen ragenden Lippen (3a, 3a', 4a, 4a') von dem gekrümmten, inneren Raum aus enden, um das Einführen des Rohrs zu erleichtern, und einen Kontakt zwischen dem genannten Rohr und der Stützfläche zu verhindern.

2. Stützschelle (1) nach Anspruch 1, **dadurch gekennzeichnet, dass** der seitliche Arm (3, 3') der Schelle mit einer zentralen Verstärkungsrippe (5, 5') versehen ist, die sich entlang ihres gekrümmten, äußeren Rands ausstreckt, und deren Ende mit ihrer jeweiligen Lippe (3a, 3a') verbunden ist.

3. Stützschelle (1) nach Anspruch 2, **dadurch gekennzeichnet, dass** die zentrale Verstärkungsrippe (5, 5') des seitlichen Arms (3, 3') entlang ihrer gesamten Länge einen durchgehenden Querschnitt hat.

4. Stützschelle (1) nach einem der Ansprüche 1 bis 3, **dadurch gekennzeichnet, dass** der komplementäre Arm (4, 4') des ersten seitlichen Arms der Schelle mit einer zentralen Verstärkungsrippe (6, 6') versehen ist, die sich entlang ihres gesamten gekrümmten, äußeren Rands ausstreckt, und deren Ende mit ihrer jeweiligen Lippe (4a, 4a') verbunden ist.

5. Stützschelle (1) nach Anspruch 4, **dadurch gekennzeichnet, dass** die Rippe (6, 6') des inneren Arms (4, 4') der Schelle mit einer Aussparung (7) ungefähr auf halbem Weg entlang ihrer Länge versehen ist, um die Anpassung an verschiedene Durchmesser des Rohrs (20) zu erleichtern.

6. Stützschelle (1) nach einem der vorherigen Ansprüche, **dadurch gekennzeichnet, dass** der Stützkörper (2) ein Befestigungsmittel (8) umfasst, das in einem in der Stützfläche gebohrten Loch eingebaut wird, um die Schelle zu befestigen.

7. Stützschelle (1) nach Anspruch 6, **dadurch gekennzeichnet, dass** das Befestigungsmittel (8) einen Bolzen mit einem Schaft (8b) umfasst, der mit einer Vielzahl an scheibenförmigen Flanschen (9) versehen ist, die entlang seiner Länge verteilt sind, und einem im Wesentlichen zylindrischen Verbindungsteil (8a), der keine Flansche hat, durch welchen der Bolzen mit dem Stützkörper (2) der Schelle verbunden ist.

8. Stützschelle (1) nach Anspruch 7, **dadurch gekennzeichnet, dass** das Verbindungsteil (8a) des Befestigungsbolzens (8) fest ist, und dazu angepasst ist, die von dem Stützkörper (2) abzufangende Scherbeanspruchung aufzunehmen, wenn der Befestigungsbolzen ordnungsgemäß in dem in der Stützfläche gebohrten Loch eingebaut ist, und das Rohr oder die Rohre an der Schelle befestigt sind.

9. Stützschelle (1) nach Anspruch 8, **dadurch gekennzeichnet, dass** das Verbindungsteil (8a) des Befestigungsbolzens mit einer länglichen Nut (8c) versehen ist.

10. Stützschelle (1) nach Anspruch 9, **dadurch gekennzeichnet, dass** die scheibenförmigen Flansche (9) des Schafts (8b) des Befestigungsbolzens (8) zumindest eine jeweilige radiale Aussparung (10) haben, die mit jener der anderen Flansche ausgerichtet ist, welche eine längliche Nut definiert, die mit der länglichen Nut (8c) des Verbindungsteils (8a) des Befestigungsbolzens als Auslass für die Druckluft innerhalb des in der Stützfläche gebohrten Lochs ausgerichtet ist, wenn der Befestigungsbolzen (8) in die genannte Öffnung eingeführt wird.

11. Stützschelle (1) nach einem der Ansprüche 6 bis 10, **dadurch gekennzeichnet, dass** das Befestigungsmittel (8) entfernbar an den Stützkörper (2) angeschlossen ist.

12. Stützschelle (1) nach einem der Ansprüche 6 bis 10, **dadurch gekennzeichnet, dass** das Befestigungsmittel (8) fest mit dem Stützkörper (2) verbunden ist.

13. Stützschelle (1) nach Anspruch 11 oder 12, **dadurch gekennzeichnet, dass** der Stützkörper (2) eine fensterähnliche Öffnung (11) hat, um die Entfernung des Befestigungsmittels (8) von dem in der Stützfläche gebohrten Loch zu erleichtern, wenn ein Werkzeug, wie ein Schraubenzieher oder eine Schnur, in die genannte Öffnung eingeführt wird, und eine Zugkraft in der Richtung aufgebracht wird, in welcher es zu entfernen ist.

## Revendications

1. Attache de support multifonction (1) pour tubes du type utilisé pour fixer et retenir des tubes (20) sur une surface de support telle qu'une paroi, qui comprend un corps de support (2) et au moins un premier bras concave courbé latéral (3, 3') s'étendant à partir de celui-ci qui est élastiquement déformable et adapté pour entourer partiellement un tube, **caractérisée en ce qu'**elle comprend au moins un bras concave courbé complémentaire correspondant (4, 4') entre le corps de support et le premier bras latéral, disposé en face du bras latéral, qui a un plus grand degré d'élasticité que ledit bras latéral, avec lequel il forme un espace intérieur courbé qui est adapté pour bien recevoir le tube, les extrémités respectives desdits bras définissant une ouverture d'une largeur inférieure au diamètre nominal du tube à fixer en l'accrochant au-delà de son centre de manière que, si cela était nécessaire, la séparation entre les extrémités libres des deux bras est variable afin d'assurer un ajustage approprié de différents diamètres de tube dans une marge de tolérance, la déformation du bras complémentaire étant limitée par le corps de support dans la direction dans laquelle l'attache s'ouvre, le premier bras latéral et son bras complémentaire se terminant par des lèvres se projetant vers l'extérieur respectives (3a, 3a', 4a, 4a') à partir de l'espace intérieur courbé pour faciliter l'insertion du tube et éviter le contact entre ledit tube et la surface de support.

2. Attache de support (1) selon la revendication 1, **caractérisée en ce que** le bras latéral (3, 3') de l'attache est pourvu d'une nervure de renfort centrale (5, 5') qui s'étend le long de son bord extérieur courbé et dont l'extrémité est reliée à sa lèvre respective (3a, 3a').

3. Attache de support (1) selon la revendication 2, **caractérisée en ce que** la nervure de renfort centrale (5, 5') du bras latéral (3, 3') a une section transversale constante le long de toute sa longueur.

4. Attache de support (1) selon les revendications 1 à 3, **caractérisée en ce que** le bras complémentaire (4, 4') du premier bras latéral de l'attache est pourvu d'une nervure de renfort centrale (6, 6') qui s'étend le long de tout son bord extérieur courbé et dont l'extrémité est reliée à sa lèvre respective (4a, 4a').

5. Attache de support (1) selon la revendication 4, **caractérisée en ce que** la nervure (6, 6') du bras intérieur (4, 4') de l'attache est pourvue d'une entaille (7) a environ mi-chemin le long de sa longueur pour faciliter l'adaptation à différents diamètres de tube (20).

6. Attache de support (1) selon l'une quelconque des revendications précédentes, **caractérisée en ce que** le corps de support (2) comprend un moyen de fixation (8) qui sera noyé au sein d'un trou perforé sur la surface de support pour fixer l'attache.

7. Attache de support (1) selon la revendication 6, **caractérisée en ce que** le moyen de fixation (8) comprend un boulon avec une tige (8b) qui est pourvue d'une pluralité de rebords discoïdes (9) distribués le long de sa longueur et une portion de connexion essentiellement cylindrique (8a) qui n'a pas de rebords, au moyen de laquelle le boulon est relié au corps de support (2) de la attache.

8. Attache de support (1) selon la revendication 7, **caractérisée en ce que** la portion de connexion (8a) du boulon de fixation (8) est solide et adaptée pour absorber la contrainte de cisaillement à supporter par le corps de support (2) lorsque le boulon de fixation est dûment noyé dans le trou perforé sur la surface de support et le tube ou tubes sont fixés à l'attache.

9. Attache de support (1) selon la revendication 8, **caractérisée en ce que** la portion de connexion (8a) du boulon de fixation est pourvue d'une rainure longitudinale (8c).

10. Attache de support (1) selon la revendication 9, **caractérisée en ce que** les rebords discoïdes (9) de la tige (8b) du boulon de fixation (8) ont au moins une entaille radiale respective (10) qui est alignée avec celle des autres rebords, qui définit une rainure longitudinale qui est alignée avec la rainure longitudinale (8c) de la portion de connexion (8a) du boulon de fixation comme une sortie pour l'air comprimé au sein du trou perforé sur la surface de support lorsque le boulon de fixation (8) est inséré dans ledit orifice.

11. Attache de support (1) selon l'une quelconque des revendications 6 à 10, **caractérisée en ce que** le moyen de fixation (8) est attaché amoviblement au corps de support (2).

12. Attache de support (1) selon l'une quelconque des revendications 6 à 10, **caractérisée en ce que** le moyen de fixation (8) est fermement relié au corps de support (2).

13. Attache de support (1) selon la revendication 11 ou 12, **caractérisée en ce que** le corps de support (2) comprend un orifice en guise de fenêtre (11) pour faciliter l'enlèvement du moyen de fixation (8) du trou perforé sur la surface de support lorsqu'un un outil tel qu'un tournevis ou un câble est inséré dans ledit orifice et qu'un effort de traction est appliqué dans la direction dans laquelle il doit être enlevé.
